# EUROPÄISCHE PATENTSCHRIFT

(11) **EP 0 598 985 B1**
(45) Veröffentlichungstag und Bekanntmachung des Hinweises auf die Patenterteilung: **05.03.1997**
(21) Anmeldenummer: 93110898.9
(22) Anmeldetag: 08.07.1993
(51) Int. Cl.: H02J 7/02

(54) **Schaltungsanordnung zur Steuerung und Überwachung eines von einer elektronischen Schaltung gesteuerten oder geregelten elektrischen Leistungsteils**
Device for monitoring and surveying one power section controlled by an electronic circuit
Dispositif de réglage et surveillance d'une section de puissance controlée par un circuit électronique

(30) Priorität: 27.11.1992 DE 4239850
(43) Veröffentlichungstag der Anmeldung: 01.06.1994
(73) Patentinhaber: Jungheinrich Aktiengesellschaft, D-22047 Hamburg (DE)
(72) Erfinder: Maasland, Hans-Hermann, Dipl.-Ing., D-24558 Henstedt-Ulzburg (DE)
(74) Vertreter: Patentanwälte Hauck, Graalfs, Wehnert, Döring, Siemons

(56) Entgegenhaltungen:
- EP-A- 0 454 500
- DE-A- 3 147 555
- DE-A- 3 524 518
- US-A- 4 654 573

## Beschreibung

Die Erfindung bezieht sich auf eine Schaltungsanordnung zur Steuerung und Überwachung eines von einer elektronischen Schaltung gesteuerten oder geregelten elektrischen Leistungsteils, insbesondere eines pulsgesteuerten Leistungsstellers für ein Batterie-Ladegerät nach dem Oberbegriff des Patentanspruchs 1.

Es ist bekannt, für ein Ladegerät eine pulsweitenmodulierte Leistungssteuerung vorzusehen. Die über eine Gleichrichterschaltung gleichgerichtete Netzspannung wird über Halbleiterschalter an die Primärwicklung eines Transformators gelegt, dessen Sekundärwicklung über ein Sekundärmodul mit dem Ladekabel verbunden ist. Es ist ferner bekannt, den Treiber für den Halbleiterschalter mittels Rechner zu steuern. Der Rechner gibt die Stellsignale für den Treiber vor und kann über entsprechende Meßwertaufnehmer mit dem Sekundärmodul verbunden sein, um eine Regelung durchzuführen.

Die Pulsweitenmodulation erfolgt in bekannten Fällen mit sehr hohen Frequenzen höher als 20 kHz. Die relativ hohe Stromsteilheit bei großem Strom- und Spannungshub verursacht starke induktive und kapazitive Störungen, die sich auch auf den Rechner auswirken können. Deshalb reicht eine galvanische Trennung über den erwähnten Transformator nicht aus, sondern es muß auch eine räumliche Trennung stattfinden. Es ist bekannt, diese räumliche Entkopplung mit Hilfe eines sogenannten Optokopplers durchzuführen. Es hat sich indessen gezeigt, daß bei einem derartigen Optokoppler auch eine Kopplung, insbesondere kapazitiver Art, auftritt und zu Störungen führt.

Aus US-A- 4 654 573 ist eine Vorrichtung zur Überprüfung einer Sendereinrichtung bekanntgeworden. Sie verriegelt die Sendereinrichtung im Falle einer Unterbrechung und schaltet sie erst nach Aufhebung der Unterbrechung wieder ein. Zu diesem Zweck werden speziell Prüfimpulse erzeugt zur Erkennung der Leiterunterbrechung. Die bekannte Schaltungsanordnung dient in erster Linie dazu, eine optische Übertragungsstrecke daraufhin zu überwachen, daß in bestimmten Fällen die Strahlungsleistung einen vorgegebenen Wert nicht überschreitet und daß ein Schutz besteht vor der Einschaltung für die Dauer der Unterbrechnung. Ferner soll eine automatische Wiedereinschaltung nach Aufhebung der Unterbrechung mit möglichst einfachen realisierbaren Mitteln gewährleistet sein. Die bekannte Einrichtung dient in erster Linie dazu, den Betrieb eines Glasfaserkabels während der Verlegung oder bei Reparaturarbeiten zu überwachen, damit keine Strahlungsschäden bei Bedienungspersonen auftreten.

Aus DE-A-31 47 555 ist ferner eine Vorrichtung bekanntgeworden, bei der Daten über Lichtwellenleiter übertragen werden. Eine Ein- und Ausschaltvorrichtung hierfür erhält Rückmeldesignale von einer Erkennungseinrichtung in dem optischen Empfänger. Es wird mithin eine Überwachungsschleife mit zwei Ein- und Ausschaltvorrichtungen in Kette geschaltet. Es ist daher möglich, das Nutzsignal durch Unterbrechung oder Sperrung eines vorangehenden Streckenabschnitts an den Signaleingang des Senders als Ersatzsignal anzulegen. Der in der Vorrichtung vorgesehene rückgeführte Lichtleiter dient mithin ausschließlich der Überwachung.

Der Erfindung liegt daher die Aufgabe zugrunde, eine Schaltungsanordnung zur Steuerung und Überwachung eines von einer elektronischen Schaltung gesteuerten oder geregelten elektrischen Leistungsteils, insbesondere eines pulsgesteuerten Leistungsstellers für ein Batterie-Ladegerät zu schaffen, die eine einwandfreie räumliche und galvanische Entkopplung zwischen Leistungsteil und der elektronischen Schaltung über einen optischen Koppler ermöglicht bei gleichzeitiger Überwachung der optischen Kopplung.

Diese Aufgabe wird erfindungsgemäß gelöst durch die Merkmale des Patentanspruchs 1.

Bei der erfindungsgemäßen Schaltungsanordnung wird die optische Strecke von zwei Lichtleitern gebildet. Der optische Sender des ersten Lichtleiters befindet sich in der elektronischen Schaltung, die zum Beispiel von einem Prozessor gebildet sein kann, während der optische Empfänger Bestandteil des Inferface ist. Die Übertragungsrichtung im zweiten Lichtleiter ist umgekehrt, daher befindet sich der zugehörige optische Sender im Interface und der Empfänger in der elektronischen Schaltung. Werden nun Stellsignale über den ersten Lichtleiter auf das Interface übertragen und dort in Stellsignale für den elektrischen Leistungsteil umgewandelt, wird gleichzeitig im Interface ein Rückmeldesignal erzeugt das mittels eines Inverten invertiert wird, und über den interfaceseitigen Sender auf die elektronische Schaltung zurückübertragen. Die elektronische Schaltung enthält einen Komparator, der das Rückmeldesignal mit einem vorgegebenen gespeicherten Signal vergleicht. Das vorgegebene Signal ist beispielsweise ein Schwellwert. Daher kann festgestellt werden, ob die optische Strecke eine ausreichende Übertragungsqualität besitzt, welche für die Übertragung von Stellsignalen von der elektronischen Schaltung zum Interface bzw. zum Leistungsteil ausreicht. Ist zum Beispiel die Dämpfung der optischen Signale zu groß, muß eine entsprechende Überprüfung vorgenommen werden. Eine derartige Überprüfung kann zum Beispiel bereits bei der Endkontrolle nach Fertigung der Schaltung, beispielsweise einer Batterie-Ladeschaltung, durchgeführt werden.

Besonders vorteilhaft ist, die Stell- und auch Rückmeldesignale als pulsweitenmodulierte Signale zu übertragen, zum Beispiel mit einer Frequenz von 100 Hz.

Die Verwendung eines Lichtleiters ermöglicht einen großen räumlichen Abstand zwischen Primär- und Sekundärmodul und garantiert, daß die Leitungen aus dem Leistungsmodul (Primärmodul) und vom Sekundärmodul (Rechnermeßkarte) mechanisch nicht ins jeweils andere Modul ragen müssen. Die Module können ausreichend durch Blechwände oder Kühlkörper räumlich getrennt werden. Die Verwendung des zweiten Lichtleiters stellt sicher, daß die optische Übertragungsqualität ständig überwacht werden kann.

Bei der Erfindung werden auch Störmeldesignale vom Leistungsteil zur elektronischen Schaltung einwandfrei übertragen, damit sie zu entsprechenden Maßnahmen in der Steuerung oder Regelung des Leistungsteils führen. Hierzu ist vorgesehen, daß die Ausgangssignale von Störmeldegebern im Leistungsteil über eine Steuerschaltung und über den zweiten Lichtleiter auf den interfaceseitigen Sender gegeben werden und die elektronische Schaltung eine Auswertestufe aufweist für die empfangenen Störmeldesignale. In gleicher Weise wie das optische Überwachungssignal über den zweiten Lichtleiter zur elektronischen Schaltung übertragen wird, können auch die Störmeldesignale übertragen werden, indem sie in eine erkennbare Form gebracht werden. Dies kann nach einer weiteren Ausgestaltung der Erfindung durch eine logische Schaltung geschehen, auf die logische Signale der Störmeldegeber gegeben werden. Die optischen Störmeldesignale sind entsprechend kodiert, so daß empfangsseitig festgestellt werden kann, welcher Art die gemeldeten Störungen sind.

Eine weitere Ausgestaltung der Erfindung sieht vor, daß analoge Stellsignale vom Interface auf den Leistungsteil oberhalb eines vorgegebenen Tastverhältnisses der pulsmodulierten Stellsignale gegeben werden und die elektronische Schaltung einen Fehlerabfragezyklus aufweist, der unterhalb des vorgegebenen Tastverhältnisses arbeitet. Ist beispielsweise das Tastverhältnis des pulsweitenmodulierten Signals T = 0,05 bis 0,95, setzt andererseits der Regelbereich der Analogspannung erst bei einem Tastverhältnis von T = 0,1 ein, dann kann eine Fehlerabfrage bei dem Tastverhältnis von 0,05 bis 0,1 erfolgen, ohne daß im Leistungsteil bereits Leistung abgegeben wird. Dadurch kann verhindert werden, daß zum Beispiel der Leistungsteil während der Fehlerprüfung eingeschaltet wird. Meldet zum Beispiel ein Temperaturgeber, daß die zulässige Temperatur überschritten worden ist, wird der Leistungsteil gar nicht eingeschaltet.

Die Erfindung wird nachfolgend anhand von Zeichnungen näher erläutert.
- Fig. 1: zeigt ein schematisches Schaltungsbild eines Batterie-Ladegerätes mit einer Schaltungsanordnung nach der Erfindung.
- Fig. 2: zeigt eine prinzipielle Darstellung der Schaltungsanordnung nach Fig. 1.
- Fign. 3a bis g: zeigen verschiedene Zustände auf den Lichtleitern nach Fig. 2.

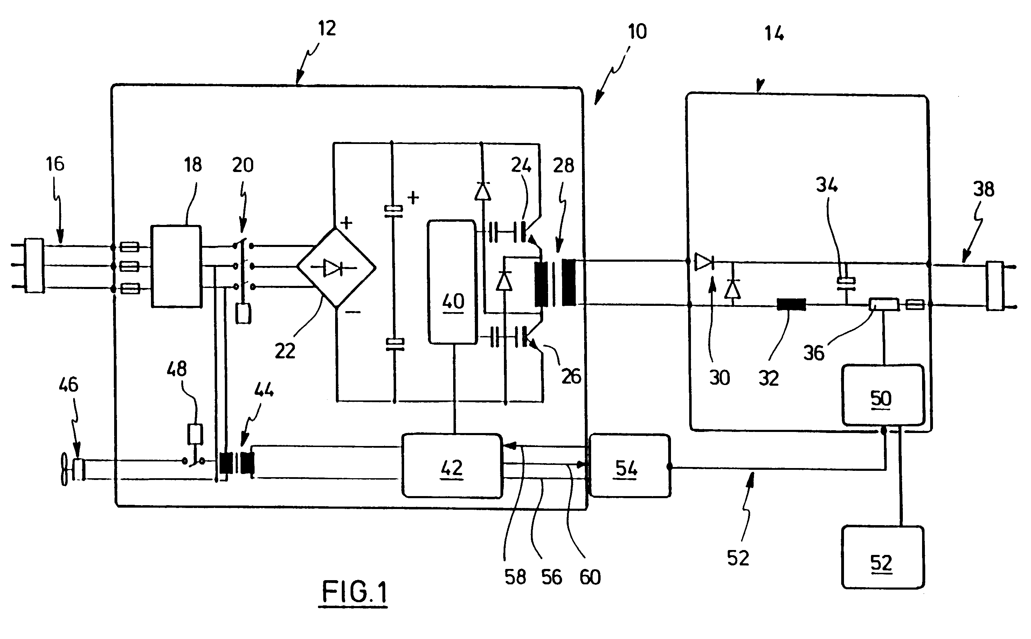

Die in Fig. 1 dargestellte Ladeschaltung 10 für eine Batterie enthält ein Primärmodul 12 und ein Sekundärmodul 14. Das Primärmodul 12 liegt über ein Netzkabel 16 an Spannung Diese wird über ein Filter 18 und ein Schütz 20 an eine Gleichrichterbrücke 22 gelegt. Die Gleichspannung wird über zwei Halbleiterschalter 24, 26 an die Primärwicklung eines Transformators 28 gelegt, dessen Sekundärwicklung mit dem Sekundärmodul 14 verbunden ist. Dadurch ist das Sekundärmodul 14 galvanisch vom Primärmodul 12 getrennt. Die Module 12, 14 sind auch räumlich voneinander getrennt, worauf weiter unten noch eingegangen wird. Das Sekundärmodul 14 enthält Gleichrichterdioden 30, eine Drossel 32, einen Kondensator 34 sowie einen Widerstand 36, der als Shunt zur Strommessung dient. Der Ausgang des Sekundärmoduls 14 liegt an einem Ladekabel 38, das mit der aufzuladenden Batterie verbunden wird.

Die Steuerung der Halbleiterschalter 24, 26 erfolgt über einen Treiber 40, der mit einem Regler 42 verbunden ist. Der Regler wird über einen Transformator 44 mit Spannung versorgt, wie auch ein Lüfter 46, der mittels eines Relais 48 an Spannung gelegt werden kann. Die Steuersignale für den Treiber 40 werden von einem Prozessor 50 im Sekundärmodul 14 erzeugt, der über eine Lichtleitung 52 mit einem Interface 54 verbunden ist. Die Stromversorgung des Interface 54 erfolgt ebenfalls über den Transformator 44, was durch eine Leitung 56 angedeutet ist. Die Stellsignale vom Interface auf den Regler 42 gehen über eine Leitung 58 und vom Regler 42 bzw. vom Primärmodul 12 gelieferte Störsignale gelangen über eine Leitung 60 in das Interface 54. Ein mit dem Prozessor 50 verbundenes Display 52 zeigt den jeweiligen Ladezustand an.

Mit Hilfe des Prozessors 50, des Treibers 40 und der Halbleiterschalter 24, 26 wird eine pulsweitenmodulierte Spannung erzeugt mit einer Frequenz von mehr als 20 kHz. Die über die Leitung 58 gesendeten Stellsignale sind pulsweitenmodulierte Steuersignale von einer Frequenz von zum Beispiel 100 Hz.

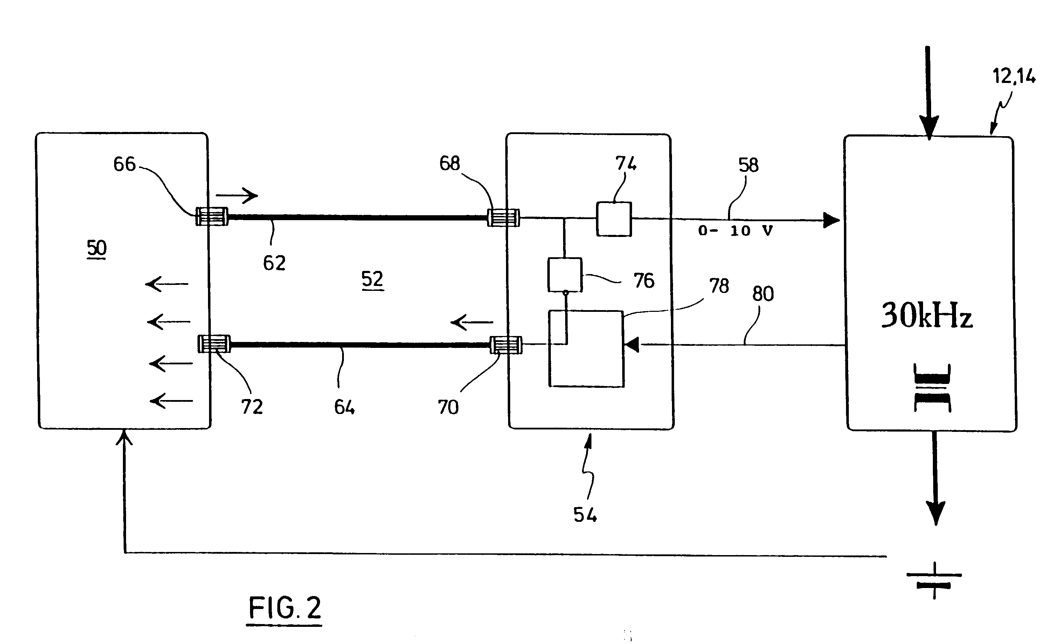

Wie aus Fig. 2 hervorgeht, besteht die Lichtleitung 52 aus einem ersten Lichtleiter 62 und einem zweiten Lichtleiter 64. Im Prozessor befindet sich ein Lichtsender 66, der über den Lichtleiter 62 zum Lichtempfänger 68 im Interface 54 sendet. Das Interface weist einen Lichtsender 70 auf, der über den Lichtleiter 64 zum Empfänger 72 im Prozessor 50 sendet. Im Interface befindet sich eine Sample-Hold-Schaltung 74, die das über den Lichtleiter 62 gesendete PWM-Signal in eine Analogspannung umsetzt. Der Regelbereich der Analogspannung (0 bis 10 Volt) setzt zum Beispiel bei einem Tastverhältnis von T = 0,1 ein. Das vom Prozessor 50 kommende über Lichtleiter 62 gesendete Signal hat zum Beispiel ein Tastverhältnis von T = 0,05 bis 0,95. Der Ausgang des Empfängers 68 ist mit einem Inverter 76 verbunden, der auf den Eingang des Senders 72 geht. Dadurch wird das Signal des Lichtleiters 62 invertiert über den Lichtleiter 64 übertragen. Der Eingang des Senders 70 ist außerdem mit einer logischen Schaltung 78 verbunden, die über eine Leitung 80 Störmeldesignale vom Primärmodul 12 erhält. Diese werden in kodierter Form ebenfalls über den Lichtleiter 64 übertragen.

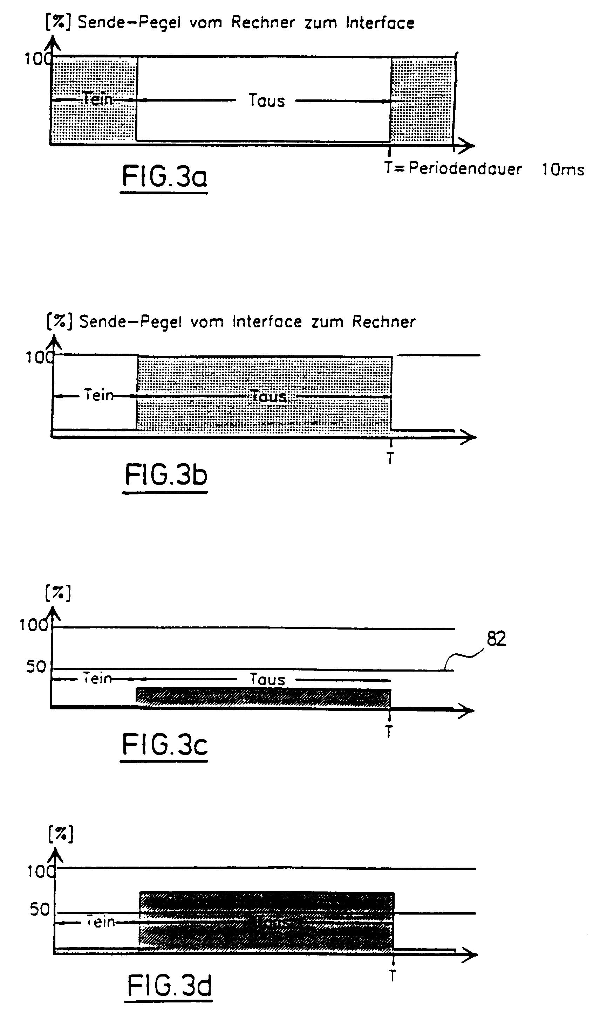

In den Figuren 3a bis 3g sind verschiedene Übertragungszustände der Lichtleiter 62, 64 dargestellt. Fig. 3a zeigt ein typisches Stellsignal auf dem Leiter 62 mit einer Periodendauer von T = 10 ms. Der Sendepegel beträgt 100%. Wie erwähnt, wird das Sendesignal invertiert bzw. reflektiert. Fig. 3b zeigt daher den Sendepegel vom Interface 54 zum Prozessor 50. Ist die Qualität der Übertragung auf den Leitern 62, 64 unzureichend, ergibt sich ein zu geringer Empfangspegel am Empfänger 72. Dies ist in Fig. 3c angedeutet, wobei der bei 50% liegende Schwellwert mit 82 bezeichnet ist. In Fig. 3d ist angedeutet, daß die Übertragung der Lichtsignale einwandfrei ist.

Es ist zweckmäßig, die Überprüfung der Übertragungsqualität der Lichtleitung 52 vor Inbetriebnahme des Leistungsteils zu prüfen. Die Fehlerabfrage kann bei dem Tastverhältnis von T = 0,05 bis T = 0,1 erfolgen. Erst oberhalb von T = 0,1 wird ein Stellsignal auf der Leitung 58 erzeugt.

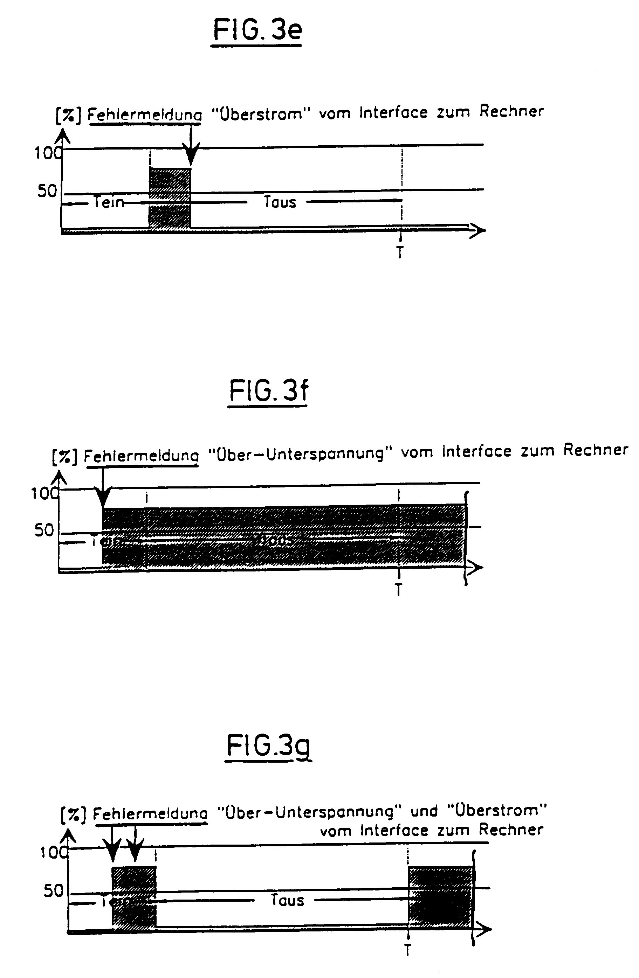

Über die Leitung 80 gelangen digitale Signale vom Störmeldegeber, beispielsweise für Temperatur, Strom oder Spannung. Sie werden als Fehler dem Prozessor 50 gemeldet. Fig. 3e zeigt zum Beispiel eine Fehlermeldung bei Überstrom vom Interface 54 zum Prozessor 50. Bei Meldung eines Überstroms wird ein Dauer-Low-Signal erzeugt. Bei einem Spannungsfehler wird gemäß Fig. 3f ein Dauer-High-Signal erzeugt. Gleichzeitige Spannungs- und Stromfehler erzeugen eine direkte Abbildung des auf der dem Leiter 62 gesendeten PWM-Signals, wie in Fig. 3g dargestellt. Wie erkennbar, zeigen die Diagramme 3e bis 3g den Pegel am Empfänger 72.

## Patentansprüche

1. Schaltungsanordnung zur Steuerung und Überwachung eines von einer elektronischen Schaltung gesteuerten oder geregelten elektrischen Leistungsteils, insbesondere eines pulsgesteuerten Leistungsstellers für ein Batterie-Ladegerät, mit einem mit dem Leistungsteil verbundenen Interface (54), das über eine optische Strecke (52) mit der elektronischen Schaltung (50) verbunden ist, dadurch gekennzeichnet, daß die optische Strecke (52) einen ersten Lichtleiter (62) mit einem Sender (66) in der elektronischen Schaltung (50) und einem interfaceseitigen Empfänger (68), dessen Ausgang mit einem Inverter verbunden ist, aufweist zur Übertragung von Stellsignalen der elektronischen Schaltung (50) auf das Interface (54) sowie einen zweiten Lichtleiter (64) mit einem Empfänger (72) auf seiten der elektronischen Schaltung (50) und einem interfaceseitigen Sender (70) zur Rückübertragung von durch den Inverter (76) invertierten Stellsignalen auf dem zweiten Lichtleiter (64), in der elektronischen Schaltung (50) ein Komparator vorgesehen ist zur Erzeugung eines Fehlersignals, wenn die Rückmeldesignale von einem vorgegebenen Signal abweichen, daß ferner die Ausgangssignale von Störmeldegebern im Leistungsteil ( 12, 14) über eine Steuerschaltung (78) auf den interfaceseitigen Sender (70) gegeben werden und die elektronische Schaltung (50) eine Auswertestufe für die empfangenen Störmeldesignale aufweist.

2. Schaltungsanordnung nach Anspruch 1, dadurch gekennzeichnet, daß die elektronische Schaltung einen Prozessor (50) aufweist.

3. Schaltungsanordnung nach Anspruch 1 oder 2, dadurch gekennzeichnet, daß der Komparator einen Schwellwert (82) aufweist.

4. Schaltungsanordnung nach Anspruch 1, dadurch gekennzeichnet, daß die Stellsignale PWM-Signale sind.

5. Schaltungsanordnung nach einem der Ansprüche 1 bis 4, dadurch gekennzeichnet, daß die Steuerschaltung eine logische Schaltung (78) ist, auf die logische Signale der Störmeldegeber gegeben werden.

6. Schaltungsanordnung nach einem der Ansprüche 1 bis 5, dadurch gekennzeichnet, daß analoge Stellsignale vom Interface (54) auf den Leistungsteil (12, 14) oberhalb eines vorgegebenen Tastverhältnisses der pulsmodulierten Stellsignale gegeben werden und die elektronische Schaltung (50) einen Fehlerabfragezyklus aufweist, der unterhalb des vorgegebenen Tastverhältnisses arbeitet.

## Claims

1. An electrical circuitry for controlling and monitoring an electrical power section controlled by an electronic circuit, in particular for controlling and monitoring a pulse width controlled power unit for a battery charge means, comprising an interface (34) connected to said power section which interface is connected via an optical link (52) to the electronic circuit (50), characterized in that said optical link (52) comprises a first optical conductor (62) including a transmitter (66) provided in said electronic circuit (50) and a receiver (68) provided in said interface, the output of said receiver being connected to an inverter, for transmitting control signals of said electronic circuit (50) to said interface (54), and further comprises a second optical conductor (64) including a receiver (72) provided for said electronic circuit (50) and a transmitter (70) provided in said interface for retransmitting control signals inverted by said inverter (76) through said second optical conductor (64), that a comparator is provided in said electronic circuit (50) for generating an error signal when the feedback signals deviate from a predetermined signal, that further the output signals of fault measuring sensors in said power section (12,14) are transmitted through a control circuit (78) to said transmitter (70) of said interface and that the electronic circuit (50) includes a processing stage for said fault measuring signals received.

2. The electrical circuitry of claim 1, characterized in that the electronic circuit includes a processor (50).

3. The electrical circuitry of claim 1 or 2, characterized in that said comparator includes a threshold (82).

4. The electrical circuitry of claim 1, characterized in that said control signals are pulse-width modulated signals.

5. The electrical circuitry of one of claims 1 to 4, characterized in that said control circuit is a logical circuit (78) to which the logical signals of said fault measuring sensors are supplied.

6. The electrical circuitry of one of claims 1 to 5, characterized in that analog control signals from said interface (54) are supplied to said power section (12,14) above a predetermined duty cycle of said pulse width modulated control signals and that the electronic circuit (50) includes a fault scanning cycle operating below said predetermined duty cycle.

## Revendications

1. Agencement de circuit pour la commande et la surveillance d'une section de puissance électrique, notamment d'un circuit de réglage de puissance commandé par impulsions pour chargeur de batterie, dont un circuit électronique assure la commande ou la régulation, comprenant une interface (54) qui est reliée à la section de puissance et est reliée par l'intermédiaire d'une voie optique (52) au circuit électronique (50), caractérisé en ce que la voie optique (52) comprend un premier guide de lumière (62) comportant un émetteur (66), qui est situé dans le circuit électronique (50), et un récepteur (68) qui est situé du côté interface et dont la sortie est reliée à un inverseur, en vue de la transmission de signaux de réglage du circuit électronique (50) à l'interface (54), ainsi qu'un second guide de lumière (64) comportant un récepteur (72) du côté du circuit électronique (50) et un émetteur (70) qui est situé du côté interface et sert à renvoyer, sur le second guide de lumière (64), des signaux de commande inversée au moyen d'un inverseur (76), en ce qu'un comparateur est prévu dans le circuit électronique (50) pour produire un signal de défaut lorsque les signaux de retour s'écartent d'un signal préfixé et en ce qu'en outre, les signaux de sortie provenant de générateurs d'indication de perturbation situés dans la section de puissance (12, 14) sont envoyés par l'intermédiaire d'un circuit de commande (78) sur l'émetteur (70) situé du côté interface et le circuit électronique (50) comporte un étage d'exploitation pour les signaux d'indication de perturbation reçus.

2. Agencement de circuit selon la revendication 1, caractérisé en ce que le circuit électronique comprend un processeur (50).

3. Agencement de circuit selon la revendication 1 ou 2, caractérisé en ce que le comparateur comporte une valeur de seuil (82).

4. Agencement de circuit selon la revendication 1, caractérisé en ce que les signaux de commande sont des signaux à modulation de largeur d'impulsion.

5. Agencement de circuit selon l'une des revendications 1 à 4, caractérisé en ce que le circuit de commande est un circuit logique (78) auquel des signaux logiques des générateurs d'indication de perturbation sont envoyés.

6. Agencement de circuit selon l'une des revendications 1 à 5, caractérisé en ce que des signaux de commande analogiques sont envoyés de l'interface (54) vers la section de puissance (12, 14) au-dessus d'un taux d'impulsions préfixé des signaux de commande modulés en impulsion et le circuit électronique (50) comporte un cycle d'interrogation de défaut qui fonctionne au-dessous du taux d'impulsion préfixé.
